(19) Europäisches Patentamt
European Patent Office
Office européen des brevets

(11) EP 2 789 661 B1

(12) EUROPEAN PATENT SPECIFICATION

(45) Date of publication and mention
of the grant of the patent:
20.12.2017 Bulletin 2017/51

(51) Int Cl.:
C09D 183/10 (2006.01)    C08F 2/48 (2006.01)

(21) Application number: 13001868.2

(22) Date of filing: 11.04.2013

(54) **HYBRID ORGANIC-INORGANIC NANOSTRUCTURED UV-CURABLE FORMULATION AND METHOD FOR PREPARATION THEREOF**

ORGANISCH-ANORGANISCHE NANOSTRUKTURIERTE UV-HÄRTBARE HYBRIDFORMULIERUNG UND VERFAHREN ZUR HERSTELLUNG DAVON

FORMULATION DURCISSABLE AUX UV NANOSTRUCTURÉE HYBRIDE ORGANIQUE-INORGANIQUE ET SON PROCÉDÉ DE PRÉPARATION

(84) Designated Contracting States:
**AL AT BE BG CH CY CZ DE DK EE ES FI FR GB GR HR HU IE IS IT LI LT LU MC MK MT NL NO PL PT RO RS SE SI SK SM TR**
Designated Extension States:
**BA ME**

(43) Date of publication of application:
**15.10.2014 Bulletin 2014/42**

(73) Proprietor: **Università del Salento**
**73100 Lecce (IT)**

(72) Inventors:
• **Esposito Corcione, Carola**
  **I-73100 Lecce (LE) (IT)**
• **Frigione, Mariaenrica**
  **I-73100 Lecce (LE) (IT)**
• **Striani, Raffaella**
  **I-73100 Lecce (LE) (IT)**

(74) Representative: **Trupiano, Federica**
**Marietti, Gislon e Trupiano S.r.l.**
**Via Larga, 16**
**20122 Milano (IT)**

(56) References cited:
• **CAROLA ESPOSITO CORCIONE ET AL: "Factors influencing photo curing kinetics of novel UV-cured siloxane-modified acrylic coatings: Oxygen inhibition and composition", THERMOCHIMICA ACTA, ELSEVIER SCIENCE PUBLISHERS, AMSTERDAM, NL, vol. 534, 27 January 2012 (2012-01-27), pages 21-27, XP028468842, ISSN: 0040-6031, DOI: 10.1016/J.TCA.2012.01.023 [retrieved on 2012-02-09]**
• **XIAO X ET AL: "Preparation of waterborne epoxy acrylate/silica sol hybrid materials and study of their UV curing behavior", COLLOIDS AND SURFACES. A, PHYSICACHEMICAL AND ENGINEERING ASPECTS, ELSEVIER, AMSTERDAM, NL, vol. 359, no. 1-3, 20 April 2010 (2010-04-20), pages 82-87, XP026935182, ISSN: 0927-7757, DOI: 10.1016/J.COLSURFA.2010.01.067 [retrieved on 2010-02-04]**
• **MALUCELLI G ET AL: "Hybrid nanocomposites containing silica and PEO segments: preparation through dual-curing process and characterization", POLYMER, ELSEVIER SCIENCE PUBLISHERS B.V, GB, vol. 46, no. 9, 15 April 2005 (2005-04-15) , pages 2872-2879, XP027727915, ISSN: 0032-3861 [retrieved on 2005-04-15]**

**Description**

The present invention relates to a nanostructured organic-inorganic hybrid formulation cross-linkable by UV radiation, a process for its production and the use of the organic-inorganic hybrid formulation as hydrophobic coating on substrates of different nature.

In the materials field currently used as hydrophobic coatings, synthetic polymeric products having high molecular weight are of common use, to be applied in the form of solution or emulsion (based on organic solvents or water), or else such polymers showing sufficiently low viscosities (monomers and oligomers) settled in the form of surface films or to be incorporated within the uncohesed structure. The most used polymeric materials are based on silanes, siloxanes, acrylic resins and fluorinated compounds. Acrylic and methacrylic resins are among the most widely used polymers in the field of coating supports of different nature thanks to their transparency, discrete water vapor permeability, good water repellency. However, in the last years their use has been limited to the treatment of manufactured articles that are non-outdoor exposed, since these products demonstrated a poor chemical - physical stability with regard to aging processes and the light that causes their yellowing.

A more recent tendency is to lean towards copolymers based on silicone resins, which seem to offer a good combination of mechanical and water repellency properties. Compared to acrylic resins, silicone resins ensure improved performances because of the presence of the Si-O bonding which is much stronger and stable than C-H and C-C bonding. Therefore such resins show good thermal stability and chemical resistance, good water vapor permeability, excellent water repellency and low viscosities. The high hydrophobic capabilities of silane compounds result from their molecular structure. Among the silane products with higher water repellency capability is the siloxane family (such as the polydimethyl siloxane PDMS). The siloxane polymers respond well to the photodegradation, but don't show a sufficient resistance to the acid pollutants, in particular to sulfuric anhydride ($SO_3$).

The fluorinated polymers show good chemical stability towards chemical and physical agents and UV radiations and they are highly water-repellent. However, the main drawback related to their use is their exclusive solubility in chloro-fluorinated solvents, which are highly toxic both for the environment and the operator health. Independently from their composition, the coatings currently present in the market are applied in the form of solutions wherein the product, already in the form of polymer, is dissolved in organic solvents, which are often quite toxic. Recently polymeric water-based solutions are used for environmental and safety reasons, but the great drawback of these systems really is the use of water as carrying solvent, which can be a limit during the formation of the polymeric film. In fact, if adverse environmental conditions occur during the coalescence process of the dispersed particles, water evaporation takes place at high rates (dry ambient) and a poorly homogeneous film is obtained, since particles have no the time to create a continuous structure. Consequently, the formed film is not able to effectively perform its function since it does not completely prevent the penetration of water and external polluting agents. Furthermore, due to too low water evaporation rates (humid ambient) the entrapment of water droplets within the polymeric film with possible plasticizing effect may occur.

In the last fifty years a new materials class which found wide use in various sectors has been put forward: organic-inorganic (O-I) hybrid materials. The study of the O-I hybrids has been particularly active and subject of great interest since, differently from composite or microcomposite materials (obtained introducing inorganic domains (particles or micrometric fibers) along the same polymeric chain or as crosslinking units among different polymeric chains maintaining distinct steps), the organic and inorganic phases are interconnected on nanometric scale in the O-I hybrid systems. This peculiar characteristic results in a final product of high performances, since the properties of both phases are not simply added to one another, but tend to act synergistically. The nanometric scale of the organic and inorganic domains makes such systems transparent to light, since their dimensions are less than the wavelength of visible light (400-700 nm). Therefore the great advantage offered by the hybrids resides in the possibility of developing materials able to incorporate in one product a series of properties, such as transparency, water repellency, mechanical and corrosion resistance, UV radiations, adhesion and scratch resistance.

In the market O-I hybrids used as coatings, with fireproof, anti-abrasive, anti-scratch, hydrophobic and oleophobic characteristics, currently exist. Such materials form, for example, the subject of the publication by M. Messori, Materiali polimerici ibridi e nanostrutturati, Atti del XXVIII Convegno-Scuola AIM, Gargnano, 2007. Many publications exist concerning the polymerization of nanostructured coating materials by UV radiation (photopolymerization). Such materials are obtained by the inclusion of lamellar nanofillers in photopolymerizable polymeric matrices. For example, the publication by X. Xiao, C. Hao (Preparation of waterborne epoxy acrylate/silica sol hybrid materials and study of their UV curing behavior, Colloids Surfaces A: Physicochemical and Engineering Aspects, Vol. 359, No 1-3, 2010, pp. 82-87) describes nanostructured coating materials based on epoxide resins containing organophilic lamellar silicates, demonstrating that the organophilic component, after the photopolymerization, contributes to the increase of impact resistance and breaking strength, as well as the decrease of water absorption.

It is also known the preparation of nanostructured systems obtained by dispersing a lamellar silicate in an hyperbranched acrylic matrix [S. Benfarhi, C. Decker, L. Keller, K. Zahouily, Synthesis of clay nanocomposite materials by light-induced crosslink polymerization, European Polymer Journal 40, (2004)]. The system, subjected to photopolymerization, showed an increase of surface hardness and a high scratch resistance.

The US Application 2013/0005881 describes, on the other hand, a dispersion containing organic-inorganic hybrid nanocomposites formed by inorganic silica nanoparticles linked to organic polymers by covalent bondings. The dispersion has a high solid content (greater than 30% by weight) and a high silica content (greater than 35% by weight). Examples of the inorganic silica nanoparticles are methacryloyloxypropyltrimethoxysilane, vinyltri(m)ethoxysilane, allyltrimethoxysilane, vinyltri-isopropenoxysilane, butenyltriethoxysilane. The organic polymer can include alkylacrylates, alkyl-alkylacrylates, acrylonitrile, styrene, etc. The method for the preparation of the dispersion comprises the following steps: hydrolyzing the silane monomers in acidic conditions; treating the surface of the inorganic silica nanoparticles with silane monomers; stabilizing the inorganic silica nanoparticles treated this way with an amine stabilizer; reacting the organic monomers with the inorganic silica nanoparticles previously obtained.

The Korean Application KR 20040104155 describes an organic-inorganic hybrid coating composition cross-linkable by UV radiation. The composition comprises a reaction product of silica sol (obtained by the condensation of an alkoxysilane of melamine type with acrylic alkoxysilane in the presence of an organic solvent in acidic conditions), a multifunctional acrylic monomer and a photoinitiator. The coating composition comprises preferably 40-80% by weight silica sol product, 10-50% by weight multifunctional acrylic monomer and 1-10% by weight photoinitiator, based on the total weight of the composition.

The Chinese Application CN101338086 describes an organic-inorganic hybrid coating cross-linked by means of light and heat. The coating comprises the following components: 7.4%-18.5% silica gel amine resin, 2.6-6.5 % epoxide resin E-44, 15-30 % epoxy acrylate, 5-15% acrylic polyurethane ester, 35-45% active diluent, 2-5% curing agent, 4-6% photoinitiator and 0.5-1% adjuvant. The silica gel amine resin is prepared with a sol-gel method and subsequently the components are mechanically mixed and stirred. The so prepared coating is applied on the metallic surface by spraying, brush painting, roller painting etc. The coated surface is radiated with UV rays and subsequently heated and cross-linked to a film, which proves to be resistant against acid, alkaline substances, salts, water, corrosion, have high hardness, good flexibility and strong adhesion on metallic substrates.

The Chinese Application CN102649835 relates to an organic-inorganic hybrid emulsion of acrylic ester characterized in high silicon content and a method for the preparation thereof. The method comprises modifying the silica sol by a silane binding agent; binding the silica sol modified with monomers having hydrophilic capabilities and containing hydroxy groups; polymerizing in situ with acrylic ester monomers. The emulsion has high storage stability at low temperature too, whereas the coating obtained after its application on a substrate is smooth and shows a high degree of transparency, hardness (5H), adhesion strength and resistance against climatic variations and water.

The publication of Carola Esposito Corcione et al. ("Factors influencing proto curing kinetics of novel UV-cured siloxane-modified acrylic coatings: Oxygen inhibition and composition", Thermochimica Acta, Elsevier Science Publishers, Amsterdam, NL. Vol. 534, pages 21-27, 27 January 2012), discloses a siloxane modified acrylic resin system containing (3-mercaptopropyl)triethoxysilane (MPTS), vinyl terminated polydimethylsiloxane (VTPDMS), trimethylolpropane trimethacrylate (TMPTMA) and UV initiator. This system is useful as coating material to improve water repellence, to increase adhesion to stone substrate and to allow the use of UV and visible light curing method. VTPDMS is used to enhance the water repellence of the coatings. VTPDMS is functionalized with MPTS at 100°C in diethylamine (cfr. page 22, 2.1. *Materials*). The presence of MPTS in the siloxane modified acrylic resin system allows to achieve a good rate of reaction and a higher conversion even in air as well as to reduce the content of the UV initiator (cfr. page 24, right column 3rd paragraph).

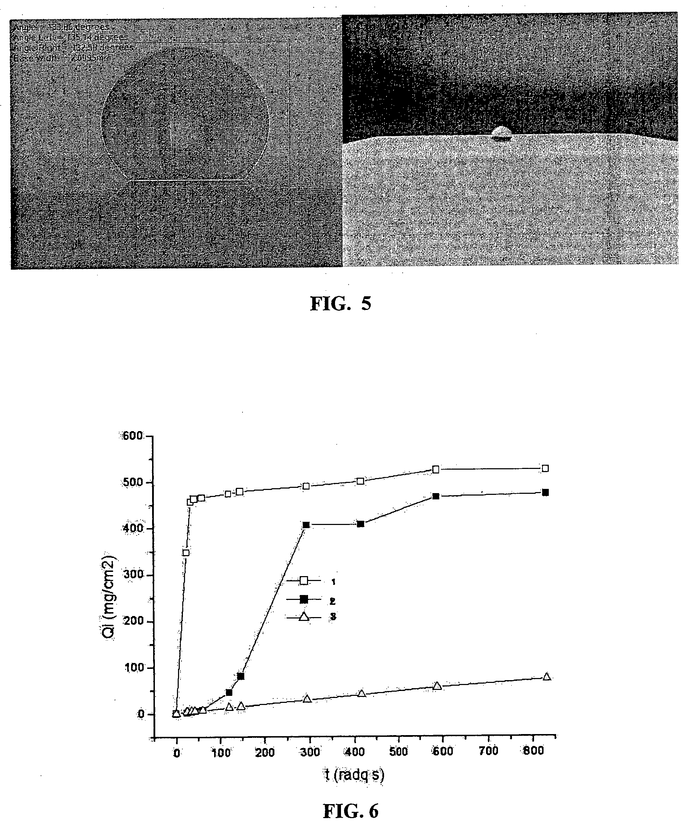

XIAO X et al. ("Preparation of weterborne epoxy acrylate/silica sol hybrid material and study of their UV curing behavior", Colloids and Surfaces, A: Physicochem. Eng. Aspects, Elsevier, Amsterdam NL, Vol. 359, N° 1-3, pages 82-87, 20 April 2010) describes UV curable waterborne epoxy acrylate/silica sol hybrid materials, which are prepared from an organic polymer phase (waterborne epoxy acrylate) and a nano-silica sol as an inorganic phase. The nano-silica sol is prepared by a sol-gel method using tetraethyl orthosilicate (TEOS) as precursor. Said organic and inorganic phases are coupled by means of a crosslinking agent (TMSPM). The TG analysis of the prepared hybrid materials shows that the addition of nano-silica sol improves the thermal stability of the waterborne epoxy acrylate (WEA) as well as the fire-retardant properties of the WEA/silica sol hybrid materials (cfr. Fig. 6 at page 86).

Malucelli G et al. ("Hybrid nanocornposites containing silica and PEO segments: preparation through dual-curing process and characterization", Polymer, Elsevier Science Publishers B.V., GB, Vol. 46, N° 9, pages 2872-2879, 15 April 2005) discloses a hybrid organic-inorganic nano-composites containing PEO segments. Two oligomers (PEGDA and BEMA) are prepared and each of them is mixed with MEMO (bridging monomer) and TEOS (inorganic precursor). The obtained mixtures are subjected to the dual curing process. The kinetic curve of PEGDA system is higher than that of the BEMA system. The kinetics of photopolymerisation for both systems are not affected by the presence of 30% w/w of TEOS in the UV-curable mixture. It is disclosed also the preparation of hybrid film containing different amount of TEOS (10-50% by weight) (buy using PEGDA or BEMA mixture). The BEMA-based systems show slightly higher Tg values with respect to PEGDA systems due to the presence of methacrylic double bonds in the polymeric chains. The Tg values of the hybrid film increase by increasing the amount of TEOS in the hybrid.

Nanostructured organic-inorganic hybrid systems are known, also well known as ceramers, made up by a continuous polymeric matrix wherein inorganic domains ($SiO_2$, $TiO_2$, etc.) are dispersed. Such systems are described for example in the following publications: M. Sangermano, G. Malucelli, A. Priola, E. Amerio, E. Zini, E. Fabbri, Hybrid nanocomposites containing silica and PEO segments: preparation through dual curing process and characterisation, Polymer 46/9, (2005); M. Sangermanno, E. Amerio, G. Malucelli, A. Priola, B. Voit, Preparation and characterisation of hybrid nanocomposite coating by photopolymerisation and sol-gel process, Polymer 46, (2005) and M. Sangermanno, E. Amerio, G. Malucelli, A. Priola, G. Rizza, Preparation and characterisation of hyperbranched polymer/silica hybrid nanocoatings by dual-curing process, Macromolecular materials and Engigeering 291, (2006). Such materials have gained an increasing interest by virtue of their properties, such as for example the good scratch, abrasion resistance and good mechanical properties. They combine the properties peculiar to the ceramic materials such as thermal stability, high module and low thermal dilatation coefficient with those of polymeric materials such as high ductility and low processing temperatures of polymeric materials. However the developing of a nanostructured organic-inorganic hybrid formulation is necessary, wherein the inorganic phase actually have nanometric dimensions and is intimately interconnected with the organic one, which is further useful to coat substrates of different nature thus showing excellent chemical and physical characteristics. Another purpose of the present invention is to provide a simple and economical method for manufacturing such an organic-inorganic hybrid formulation.

These purposes are achieved by an organic-inorganic hybrid formulation according to claim 1 and by a method for the preparation thereof according to claim 9. The nanostructured organic-inorganic hybrid formulation according to the invention is composed of an organic phase based on trimethoxypropil silane methacrylate (MEMO) and functionalized poly(dimethylsiloxane)-terminated vinyl (VTPDMS), polymerizable by UV radiations and of an inorganic phase, obtained from siloxy precursor, composed of continuous silica nanodomains. The organic nature component is covalently bound to the inorganic component. The organic-inorganic hybrid formulation is highly hydrophobic, nanostructured and photopolymerizable, and has complex and advantageous characteristics when used as coating applied on different nature substrates. Such characteristics are for example: high water-repellency, excellent surface mechanical properties (scratch resistance, surface hardness), good transparency and negligible color variation.

In particular, the organic-inorganic hybrid formulation of the invention contains silica nanophases interconnected with a polymeric matrix polymerizable by UV radiation. Such nanostructured organic-inorganic hybrid formulation crosslinkable by UV radiation contains 4-15% by weight of at least one alkoxy-silane compound, 22-90% by weight of trimethoxypropil silane methacrylate (MEMO) and functionalized poly(dimethylsiloxane)-terminated vinyl (VTPDMS), 5-60% by weight of methacrylic resin and 1-3% by weight of UV photoinitiator and 1-4% by weight of organic solvent. The amounts given in % by weight relate to the total weight of the organic-inorganic hybrid formulation.

The alkoxy-silane compound used in the hybrid formulation is preferably tetraethoxysilane (TEOS). The poly(dimethylsiloxane)-terminated vinyl is functionalized with mercaptosilane (mPDMS) and is present in an amount from 2% to 5% by weight with reference to the total weight of the hybrid formulation. The methacrylic resin is preferably trimethylpropane trimethylacrylate (TMPTMA).

The UV photoinitiator is preferably bis(2,4,6-trimethylbenzoyl)-phenylphosphinoxide currently commercialized with the name of Irgacure® 819, produced by Ciba-Geigy. The organic solvent used in the hybrid formulation of the invention is preferably an alcohol.

A further aspect of the invention is represented by a method for the preparation of the organic-inorganic hybrid formulation according to claim 1.

For the preparation of the hybrid formulation of the invention the known sol-gel method has been modified so that is obtained a nanostructured organic-inorganic hybrid formulation, which is useful to coat different nature substrates showing, when used as coating, excellent chemical and physical characteristics.

The method for the preparation of the liquid hybrid formulation of the invention comprises the preparation of a colloidal suspension of solid particles in a liquid (sol phase), which after a hydrolysation and condensation process, is transformed into a single and continuous macromolecule occupying the whole volume (gel phase).

In particular, the method for manufacturing the hybrid formulation of the invention comprises the following steps:

a) mixing an alkoxy-silane compound, trimethoxypropyl silane methacrylate (MEMO) with an organic solvent at an acidic pH,
b) hydrolyzing and condensing the mixture obtained in step a) with water,
c) mixing the product obtained in step b) with a mixture obtained by methacrylic resin and poly(dimethylsiloxane)-terminated vinyl functionalized with mercaptosilane, and
d) introducing a photoinitiator in the product obtained in step c).

More particularly, the process of the invention provides for:

a) mixing 4-15% by weight of an alkoxy-silane compound, 20-85% by weight of trimethoxypropil silane methacrylate (MEMO) with 1-4% by weight of an organic solvent at an acidic pH,

b) hydrolyzing and condensing the mixture obtained in step a) with water,

c) mixing the product obtained in step b) with a mixture obtained by 5-60% by weight of a methacrylic resin and 2-5% by weight of poly(dimethylsitoxane)-terminated vinyl (VTPDMS) functionalized with mercaptosilane, and

d) introducing 1-3% by weight of a photoinitiator in the product obtained in step c).

All the amounts are referred to the total weight of the formulation.

The mixing techniques more adequate to promote a complete miscibility between the components provides for the use of a mechanical homogenizer and a magnetic stirrer, used for determined times and mixing temperatures so as to optimize the process.

The mixing time in steps a) and b) is ranging between 20 and 60 minutes, preferably between 20 and 40 minutes. The mixing occurs preferably by means of a magnetic stirrer.

The amount of water used in step b) of the method is ranging between 20% and 30% based on the content by weight of the alkoxy-silane compound.

Step b) is carried out at a temperature ranging between 30°C and 70°C, preferably between 40°C and 60°C to promote the hydrolysation and condensation reactions.

The addition of a photoinitiator occurs under vigorous stirring carried out by means of a homogenizer.

The pH, of the mixture obtained in step a) is preferably 4. The pH of the mixture can be adjusted with an acid solution, for example with a 5% by weight HCl aqueous solution. The alkoxy-silane compound used in the method is preferably tetraethoxysilane (TEOS), currently commercialized by Aldrich, playing the role of alkoxy precursor for the hydrolysation and condensation reactions in the sol-gel process. The poly(dimethylsiloxane)-terminated vinyl is functionalized with mercaptosilane (mPDMS). The VTPDMS functionalization process with mercaptosilane (MPTS) is necessary to reduce the oxygen inhibition effect against the radicalic photopolymerization reaction, typical of the acrylic and silane monomers. The VTPDMS monomer functionalized with mercaptosilane is named mPDMS.

The use of MEMO and VTPDMS allows, in the process according to the invention, to improve the water-repellency and the chemical-physical stability of the methacrylic resin towards the light.

The methacrylic resin is preferably trimethylpropane trimethylacrylate (TMPTMA), currently produced by Cray Valley. This type of resin is characterized by a high rate due to the presence of three reactive functional groups and a low viscosity.

The UV photoinitiator is preferably bis(2,4,6-trimethylbenzoyl)-phenylphosphinoxide, currently commercialized as Irgacure® 819, produced by Ciba-Geigy. Irgacure® 819 is able to activate the photopolymerization reactions in the desired UV wavelength range, and in particular at the wavelength of 365 nm. The hybrid formulation according to the invention is advantageously applied in the form of monomers photopolymerizable *in situ* by UV radiation, since the polymerization *in situ* can improve the penetration depth.

The nanostructured organic-inorganic hybrid formulation of the invention can be applied on different nature substrates, such as for example glass, wood, metal and plastic by known techniques, such as for example brush painting, spraying, immersion and roller painting.

Subsequently the application of the hybrid formulation of the invention, there shall be the polymerization through dual-curing, providing for a double treatment: a first polymerization by UV radiation followed by a thermal treatment, promoting the completion of the sol-gel process. The thickness of the obtained coating is ranging between about ten and hundreds μm.

Further characteristics and advantages of the present invention will become more evident from the following examples, by way of example and not limiting, with reference to the attached figures, wherein:

- Figures 1A-1C represent the curves obtained by DLS (Dynamic Light Scattering) analysis to investigate the distribution of solid particles depending on the time in the hybrid formulation of the invention;
- Figure 2 is the XRD (X-Ray Diffraction) spectrum of the particles contained in the hybrid formulation of the invention;
- Figure 3 represents the thermogravimetric analysis (TGA) curve related to the hybrid formulation of the invention compared to a control formulation;
- Figure 4 is the chart of the curves obtained by transmittance measurements of films polymerized by the hybrid formulation of the invention and the control formulation;
- Figure 5 shows on the left the contact angle measurement ranging between the stone substrate (Lecce stone), treated with the hybrid formulation of the invention, and the line passing through the intersection point at the substrate/water interface, whereas the photo on the right shows a water droplet onto the Lecce stone specimen treated with the hybrid formulation of the invention;
- Figure 6 is a chart obtained by water absorption measurements through capillarity carried out on the stone samples treated with the hybrid formulation of the invention, with the control formulation compared to a non-treated stone sample;

- Figure 7 represents the protective efficacy curve of the coating obtained by polymerization of the hybrid formulation of the invention onto the Lecce stone samples depending on the time;
- Figure 8 shows the photo of the stone treated with the hybrid formulation of the invention in the center, with the control formulation on the right, compared to the non-treated stone on the left;
- Figure 9 reports the elements mapping present in the subsuperficial and deeper zone of the Lecce stone sample treated with the hybrid formulation of the photopolymerized invention.

**Example 1**

**Functionalization of poly(dimethylsiloxane)-terminated vinyl (VTPDMS) with mercaptosilane (MPTS).**

The functionalization of poly(dimethylsiloxane)-terminated vinyl (VTPDMS) (produced by Aldrich) with mercaptosilane (MPTS) (produced by Aldrich) is occurred in presence of 1% by weight of diethylamine (DTA) (produced by Aldrich), by mixing 100 g VTPDMS and 0.95 g MPTS in molar ratio 1:1 and maintaining the obtained mixture for 2h at 100°C in oven. The obtained product is named mPDMS and is used in the following process to prepare the following nanostructured organic-inorganic hybrid formulation.
If not stated differently, the amounts given in % by weight relate to the total weight of the formulation.

**Preparation of a hybrid formulation of the invention**

77 g MEMO (produced by Dow Corning) and 7 g TEOS (produced by Aldrich) were mixed over magnetic stirrer for 30 minutes, after 1.75 g ethanol and 5% by weight of hydrochloric acid aqueous solution was added to the obtained mixture to obtain a mixture of pH 4. Subsequently 1.81 g of water was added and the mixing was carried on over magnetic stirrer for 30 minutes at 50°C to promote the hydrolysation and condensation reactions. To the so obtained MEMO and TEOS mixture a mixture of 5 g of mPDMS (previously prepared) and 10 g of TMPTMA (produced by Cray Valley) was added. The obtained mixture was stirred over a magnetic stirrer for 20 minutes. Finally 1 g Irgacure® 819 (produced by Ciba Geigy) was added and the liquid formulation was mixed energetically at a rate of 10000 rpm with a homogenizer for 3 minutes.

**Example 2**

**Preparation of a non-hybrid control formulation.**

For the preparation of a non-hybrid control formulation the same compounds were used as in Example 1 with the difference that TEOS, the alkoxy-silane compound, is not being used.
Such a control formulation has been prepared by mixing 4 g mPDMS, prepared in Example 1, with 20 g TMPTMA over a magnetic stirrer for 1 h at 60°C. Subsequently 75 g MEMO was added to the obtained mixture and the stirring was carried on for 10 minutes. Finally 1 g Irgacure® 819 under continuous stirring has been introduced in the mixture.

**Characterization of the liquid hybrid formulation, obtained in Example 1 compared to the non-hybrid formulation obtained in Example 2. DLS (Dynamic Light Scattering) analysis**

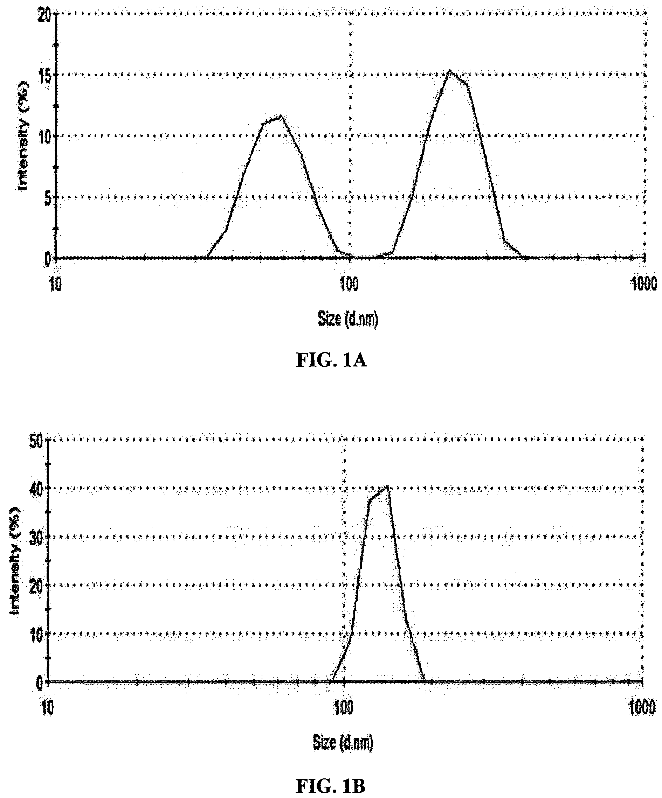

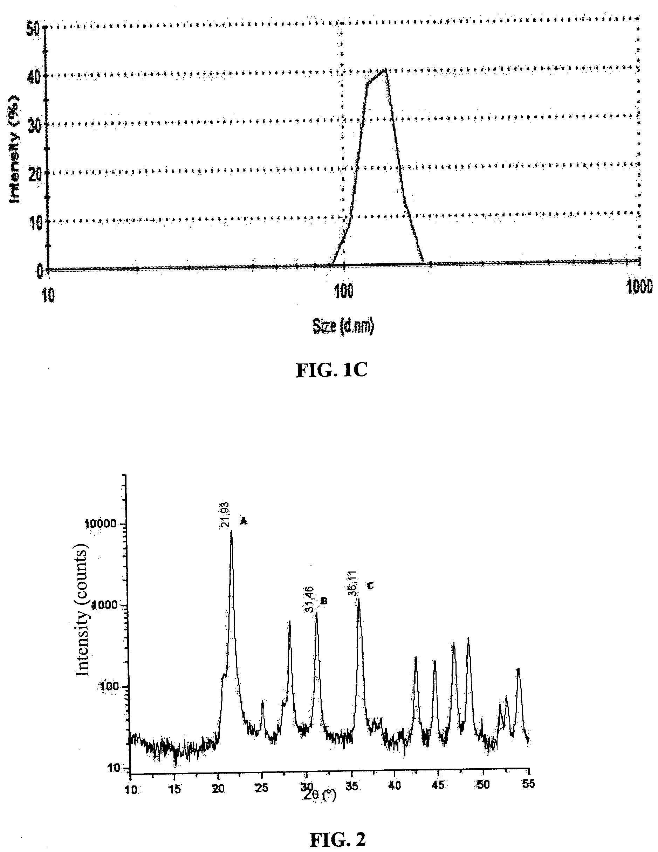

The hybrid formulation was subjected to DLS analysis (DLS Zetasizer) in order to evaluate the sizes of the silica particles created after the reactions of TEOS alkoxy hydrolysation and condensation. Such measurement was carried out on the formulation after one day, five months and one year since its preparation to investigate the stability in the formulation during the time, in the perspective to estimate the storage time. The obtained DLS curves are reported in Figures 1A-1C. The distribution of the dispersed solid particles, measured one day after the preparation of the hybrid formulation, appears bimodal. In particular about 55% of the particles has a diameter of about 232 nm and the remainder 45% of the particles has a diameter of about 57 nm (Figure 1A). After 5 months, the size distribution of the same mixture becomes unimodal, that is all of the particles have uniform diameter of about 134 nm (Figure 1B). This result suggests that the hybrid formulation contains nanometric particles, confirming the efficacy of the used method. However, these particles are not completely stable at least until five months since their preparation; in fact after such a period their dimension, still nanometric, becomes uniform. One year after the preparation the same DLS investigation was also carried out on the hybrid formulation (Figure 1C), confirming that the particles maintain the same size for periods longer than five months.

**XRD analysis**

To confirm the nature of particles contained in the hybrid mixture, the solid residue, obtained burning the liquid formulation in oven at 1200°C, has been analyzed by XRD analysis. Figure 2 shows the XRD spectrum of the powder resulting from the sol containing 7 g TEOS. Peak A is the primary peak, peak B is the tertiary peak, whereas peak C corresponds to the secondary peak on Figure 2.

The results obtained by XRD analysis confirm that the hybrid mixture contains silica powders, as the identified peaks are those characteristic of the cristobalite (crystalline silica).

**Thermogravimetric analysis**

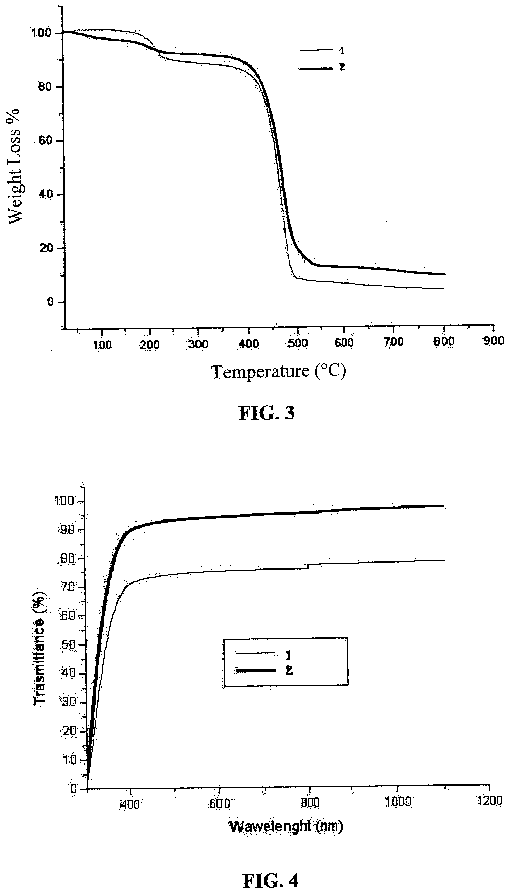

In order to quantify the silica content, obtained from 7 g TEOS, the hybrid formulation was subjected to a thermogravimetric analysis, carried out at 10°C/min under nitrogen atmosphere, from 25°C to 800°C. The TGA curve related to the hybrid formulation 2 compared to that obtained on the control 1 formulation is reported in Figure 3.

The hybrid formulation shows four degradation steps: the first, placed between 30°C and 140°C, shows a weight loss of about 2% and has been assigned to the evaporation of solvents (water and ethanol) used for the sol-gel reactions; the second, ranging between 140°C and 300°C, with 5% weight loss is similar to that observed for the control formulation, in absence of TEOS. The third, placed between 300°C and 630°C with a weight loss of 87% and the forth between 630°C and 800°C shows a weight loss of about 25%. The final residue content is about 9% by weight. The difference among this residue and that measured in case of the formulation not containing TEOS (control) (4%) corresponds to about 5% by weight, representing the silica composing the hybrid inorganic part.

**Characterization of the hybrid formulation, obtained in Example 1, compared to the control formulation obtained in Example 2; both were applied on glass and photopolymerized.**

The liquid hybrid formulation obtained in Example 1 and the control formulation obtained in Example 2 were applied by painting to obtain a film of about 100 $\mu$m on a glass support and photopolymerized by the dual curing process: exposure of the support treated with UV lamp (HG 200ULTRA- Jelosil) having a power of 328 $\mu$Watt/mm$^2$ for 6 hours and subsequently permanence time of the same film in oven at 140°C for 1 hour.

All of the films obtained by the dual curing process both with control and hybrid formulations, have been analyzed in terms of transparency, scratch resistance and glass transition temperature.

In the following, "photopolymerized film" means that the films were subjected to the dual curing process described herein.

The degree of transparency and scratch resistance of the photopolymerized film on glass measurement has been obtained by transmittance measurements, carried out by the spectrophotometer UV-visible (Cary 5000 UV-Vis-NIR spectrophotometer), and *pencil hardness* measurements, by the equipment Pencil Hardness Tester (Bleistift-Härteprüfer BYK), according to ISO 15184:1998 regulation. The results are summarized in Table 1.

**Table 1**

| Photopolymerized Samples | Scratch resistance | UV visible transmittance (%) | Hardness Shore D | Contact angle (°) |
|---|---|---|---|---|
| Hybrid | 9H | 96 | 22.1 | 106.01$\pm$2.32 |
| Control | 5H | 72 | 16.2 | 86.11$\pm$2.46 |

From results reported in Table 1, related to the measurements carried out on films photopolymerized on glass, it can be deduced that the hybrid coating according to the present invention, shows an excellent scratch resistance and is also highly transparent, sign of obtaining a nanostructured system able not to alter the natural shade of the support on which it will be applied. The results of the Shore D hardness tests carried out on samples in the form of bars (3.5 x 10 x 3 mm) cured according to the dual curing process, highlight an increase of the surface hardness switching from the control to the hybrid sample, always assignable to the presence of the nanostructured inorganic phase.

Figure 4 shows the comparison among the transmittance curves of the hybrid formulation 2 of the invention and the control formulation 1, by which the formation of continuous silica nanometric nanodomains in the cross-linked organic matrix is confirmed, allowing to significantly increase the transparency of the control formulation.

Furthermore, the film of the hybrid formulation according to the present invention has excellent hydrophobic properties, as resulting from data of the contact angle reported in Table 1, highlighting a clear improvement of the hydrophobic capabilities of the photopolymerized film switching from the control to the hybrid formulation. The samples treated with the hybrid and with the control formulation, produced in the form of bars (3.5 x 10 x 3 mm) and cured according to the previously described dual curing process, were subjected to Shore D hardness measurements, according to DIN 53505 regulation, and to glass transition temperature measurements, by the DMA (dynamic-mechanical analysis in torsion mode, rheometer Ares Rheometric) technique.

During DMA measurements the samples were subjected to a fluctuation of constant amplitude (10%) and frequency (1 Hz) and heated from ambient temperature to 150°C at 5°C/min. Tg was calculated as the peak temperature of the loss tangent curve (tg$\delta$).

The obtained results of measurements of the glass transition temperature (Tg) show that Tg for the hybrid sample was 70 °C, whereas Tg for the control sample was 53 °C.

These Tg values show that the hybrid formulation has a glass transition temperature higher than the control formulation of about 16°C. This beneficial increase of the glass transition temperature, widening the field of application of the material, is once again justified by the presence of silica nano-domains which is interconnected in the photocross-linked organic matrix.

### Analyses carried out on the treated stone materials.

The developed hybrid and control formulations were applied onto a stone support. In particular a limestone marl, typical of the Salento area, the Lecce stone, was selected. Also in this case the polymerization of the films applied onto stone has been carried out by the previously described dual curing process. The products were applied by painting onto the stone surface, in a single spreading, after the stone specimens has been dried and stabilized in oven for 24 hours in lab ambient.

Analyses were carried out on the Lecce stone samples treated with the experimental products in order to verify the possible use of the hybrid product as hydrophobic coating. In particular, measurements were carried out for obtaining: contact angle, capillarity water absorption, penetration depth of the product by morphological investigations, chromatic variation brought by the hybrid product to the stone support.

### Measurements of contact angle and capillarity water absorption

The contact angle measurements have been carried out by the instrument First Ten Angstroms FTA1000 Quick Start (NORMAL 33/89). For the purpose of ensuring a regular distribution of the measurement points and their reproducibility, on every specimen the contact angle has been measured on the basis of a grid corresponding to their surface and consisting of twenty measurement points.

The capillarity water absorption measurements were performed according to the directions set by UNI 10859-2000 regulation.

In table 2 the results of the measurements of water absorption and contact angle of the Lecce stone specimens treated with the hybrid formulation and control formulation are summarized.

**Table 2**

| Formulation | Protective efficacy by capillarity (%) | Contact angle (°) | | | |
|---|---|---|---|---|---|
| | | 1 st day | 1 st month | 3rd month | 5th month |
| Hybrid | 86 | 125.26$\pm$6.51 | 128.86$\pm$5.05 | 130.37$\pm$4.07 | 123$\pm$6.17 |
| Control | 9 | 87.62$\pm$3.63 | 92.03$\pm$4.62 | 94.12$\pm$3.54 | 95.03$\pm$3.07 |

The contact angle measurements were carried out at different times (after 1 day, 1 month, 3 months and 5 months) since the application and in each case they highlighted that the hybrid product has excellent water-repellency properties that are also maintained quite stable over time. In order to show better the potential of the developed hybrid product, a contact angle measurement carried out on a Lecce stone specimen, shown by the photo of Figure 5 and treated with the hybrid product (the photo on the left), is reported below. The photo on the right shows a water droplet onto the stone support treated with the hybrid product, highlighting its unequivocally high hydrophobic power.

Note that the contact angle ($\alpha$) of the specimens treated with the hybrid formulation (about 125°) is definitely higher than that of the control formulation (about 87°). Such result clearly highlights that the hybrid formulation applied as coating has hydrophobic property.

Excellent results have also been obtained by the capillarity measurements carried out on the stone samples treated with the hybrid product, as highlighted by the curves reported in Figure 6. Figure 6 shows the capillarity curves measured on not-treated stone 1 and on stones treated with the control formulation 2 and with the hybrid formulation 3 of the invention.

Further from the capillarity water absorption measurements the protective efficacy (PE) of treated specimens was calculated, according to the formula:

$$PE = \frac{P_{H_2O(NT)} - P_{H_2O(T)}}{P_{H_2O(NT)}} * 100$$

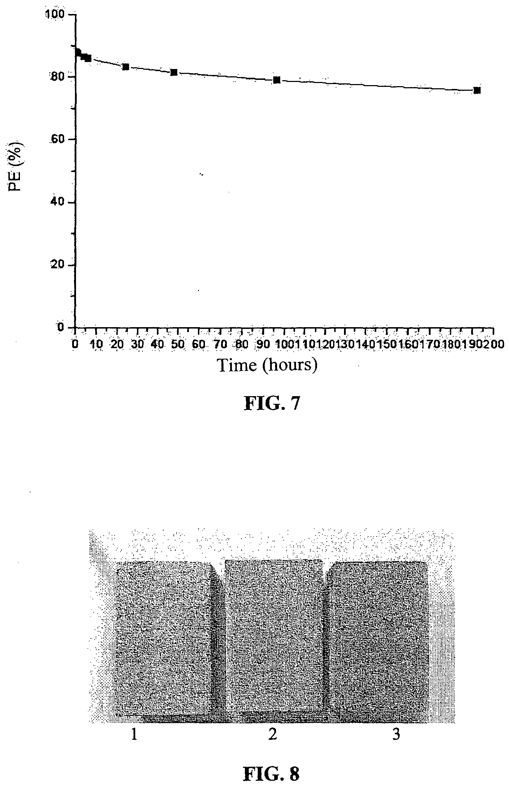

where $P_{H2O(NT)}$ and $P_{H2O(T)}$ are respectively the grams of water absorbed by capillarity by the stone specimen not-treated and treated after 8 days. The obtained PE values are equal to about 9% for the control formulation and 86% for the hybrid formulation (Table 2). Thus, the presence of interconnected nanostructured silica allowed to significantly increase the hydrophobic capability of the organic matrix, confirming the very high hydrophobic characteristic of the hybrid formulation of the invention. Figure 7 shows the protective efficacy curve of the photopolymerizable hybrid formulation of the invention depending on the time given in hours.

**Morphological investigations and color variations measurement**

The morphological observations of the treated stone surfaces and the EDS microanalyses were performed with a SEM (Zeiss Evo40), provided with EDS microanalysis system.

Onto the surfaces of Lecce stone specimens, color measurements were carried out before and after the treatment, by a reflectance colorimeter CR-410 Konica Minolta following the instructions of the Recommendation NORMAL 43/93. Three series of 10 color measurements were carried out on every sample each to verify the results repeatability. The data were acquired in the CIE space (L a*b*) and the color variations of surfaces after the treatments were given in terms of ΔE.

The obtained values resulted from the measurements of glass transition temperature (Tg) show that Tg for the hybrid sample was 70 °C, whereas Tg for the control sample was 53 °C.

The value of measured color variation (ΔE) on the specimen treated with the hybrid formulation obtained in Example 1 was 11.42, whereas the value of the specimen treated with the control formulation obtained in Example 2 was 19.20.

The difference in the color variation caused by the control and the hybrid treatment is also visible to the naked eye, as can be deduced by the observation of the photo reported in Figure 8, wherein the presence of the treatment carried out with the control formulation 3 is easily distinguished, whereas only a very slight alteration of the natural coloring of the stone is noted in case of treatment with the hybrid formulation 2 of the invention. Figure 8 shows in succession from the left: the not-treated Lecce stone 1, the Lecce stone treated with the hybrid formulation 2 and the Lecce stone treated with the control formulation 3.

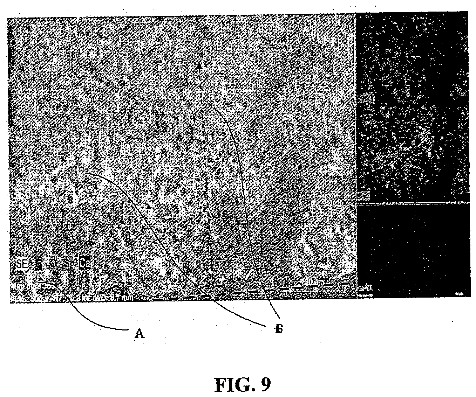

The determination of the penetration depth of the hybrid products applied and photopolymerized onto Lecce stone was carried out through SEM measurements and EDS microanalyses, to evaluate the progressive decrease of the silicon concentration, due to silica contained in the hybrid systems, depending on the distance from the treated stone surface. In order to evaluate the mode of product penetration within the porous stone, on the same section a mapping of the elements was carried out by EDS analysis. Figure 9 shows the mapping of the elements present in the Lecce stone sample treated with the hybrid formulation obtained in Example 1. With the black dotted line the surface line of the analyzed sample, and with the dotted arrow the way of product penetration referring to the surface, are shown.

From SEM observations and mapping of the elements it was possible to observe the product distribution within the stone. Figure 9 shows the subsuperficial area, where the red signal A shows the carbon presence (tracing element of the organic component), whereas in the deeper areas the green signal B of silicon (tracing element of silica) is outstanding. This is indicating how the inorganic component of the applied hybrid formulation is able to penetrate more easily within the stone pores thanks to its nanometric dimensions, leaving in the superficial area the organic component which ensures the water-repellent effect of the treatment. The penetration depth of the hybrid product within the stone support was determined by EDS microanalysis at different distances from the surface treated in the direction shown by the arrow in Figure 9. To confirm what has been observed by element mapping, the microanalysis highlighted that the hybrid product is present within the stone up to 6 mm distance from the surface. The high penetration depth makes the hybrid formulation of the invention particularly suitable for the coating application.

The nanostructured organic-inorganic hybrid formulation obtained with the method of the present invention is particularly suitable for the application as coating material onto substrates of different nature thanks to its excellent chemical and physical characteristics, such as scratch resistance, transparency, hardness, hydrophobic properties, high glass transition temperature and lack of chromatic variation on a long term.

**Claims**

1. A nanostructured organic-inorganic hybrid formulation cross-linkable by UV radiation, composed of an organic phase based on methacrylic-silane monomers and of an inorganic phase composed of continuous silica nanodomains obtained from at least one alkoxy-silane precursor, **characterized by** comprising trimethoxypropyl silane methacrylate, poly(dimethylsiloxane)-terminated vinyl functionalized with mercaptosilane, at least one methacrylic resin and at least one UV photoinitiator.

2. A nanostructured organic-inorganic hybrid formulation cross-linkable by UV radiation according to claim 1, **characterized by** being obtained from 4-15% by weight of at least one alkoxy-silane compound, and comprising 22-90% by weight of trimethoxypropyl silane methacrylate and functionalized poly(dimethylsiloxane)-terminated vinyl, 5-60% by weight of a methacrylic resin and 1-3% by weight of a UV photoinitiator and 1-4% by weight of an organic solvent.

3. The hybrid formulation according to claim 1, **characterized in that** the alkoxy-silane compound is tetraethoxysilane.

4. The hybrid formulation according to claim 1, **characterized in that** the poly(dimethylsiloxane)-terminated vinyl functionalized with mercaptosilane is present in the formulation in an amount from 2% to 5% by weight.

5. The hybrid formulation according to claim 1, **characterized in that** the methacrylic resin is trimethylpropane trimethylacrylate.

6. The hybrid formulation according to claim 1, **characterized in that** the UV photoinitiator is bis(2,4,6-trimethylbenzoyl)-phenylphosphinoxide.

7. The hybrid formulation according to claim 2, **characterized in that** the organic solvent is an alcohol.

8. Use of the formulation according to claim 1 to coat substrates of different nature.

9. Method for the preparation of the nanostructured organic-inorganic hybrid formulation composed of an organic phase based on methacrylic-silane monomers and of an inorganic phase composed of continuous silica nanodomains obtained from an alkoxy-silane precursor of claim 1, **characterized by** comprising the following steps:

    a) mixing an alkoxy-silane compound and trimethoxypropyl silane methacrylate with an organic solvent at an acidic pH,
    b) hydrolyzing and condensing the mixture obtained in step a) with water,
    c) mixing the product obtained in step b) with a mixture obtained by methacrylic resin and poly(dimethylsiloxane)-terminated vinyl functionalized with mercaptosilane , and
    d) introducing a photoinitiator in the product obtained in step c).

10. Method for the preparation of the nanostructured organic-inorganic hybrid formulation of claim 9, **characterized by** comprising the following steps:

    a) mixing 4-15% by weight of an alkoxy-silane compound, 20-85% by weight of trimethoxypropyl silane methacrylate with 1-4% by weight of an organic solvent at an acidic pH,
    b) hydrolyzing and condensing the mixture obtained in step a) with 20-30% by weight of water based on the alkoxy-silane compound content,
    c) mixing the product obtained in step b) with a mixture obtained by 5-60% by weight of a methacrylic resin and 2-5% by weight of poly(dimethylsiloxane)-terminated vinyl functionalized with mercaptosilane, and
    d) introducing 1-3% by weight of a photoinitiator in the product obtained in step c).

11. The method according to claim 9, **characterized in that** the pH of the mixture obtained in step a) is 4.

12. The method according to claim 9, **characterized in that** the solvent is alcohol.

13. The method according to claim 9, **characterized in that** the alkoxy-silane compound is tetraethoxysilane.

14. The method according to claim 9, **characterized in that** the methacrylic resin is trimethylpropane trimethylacrylate

**15.** The method according to claim 9, **characterized in that** the UV photoinitiator is bis(2,4,6-trimethylbenzoyl)-phenylphosphinoxide.

**Patentansprüche**

**1.** Nanostrukturierte, durch UV-Strahlung vernetzbare organisch-anorganische Hybridformulierung, bestehend aus einer auf Methacrylsilanmonomeren basierenden organischen Phase und einer aus kontinuierlichen Siliziumdioxid-Nanodomainen zusammengesetzten, aus mindestens einem Alkoxysilan-Vorläufer erhaltenen organischen Phase, **dadurch gekennzeichnet, dass** sie Trimethoxypropylsilanmethacrylat, mit Mercaptosilan funktionalisiertes, poly(dimethylsiloxan)-terminiertes Vinyl, mindestens ein Methacrylharz und mindestens einen UV-Photoinitiator enthält.

**2.** Nanostrukturierte, durch UV-Strahlung vernetzbare organisch-anorganische Hybridformulierung gemäß Anspruch 1, **dadurch gekennzeichnet, dass** sie aus 4 bis 15 Gew.-% mindestens einer Alkoxysilanverbindung erhalten wurde und 22 bis 90 Gew.-% Trimethoxypropylsilanmethacrylat und funktionalisiertes poly(dimethylsiloxan)-terminiertes Vinyl, 5 bis 60 Gew.-% eines Methacrylharzes und 1 bis 3 Gew.-% eines UV-Photoinitiators und 1 bis 4 Gew.-% eines organischen Lösungsmittels enthält.

**3.** Hybridformulierung gemäß Anspruch 1, **dadurch gekennzeichnet, dass** die Alkoxysilanverbindung Tetraethoxysilan ist.

**4.** Hybridformulierung gemäß Anspruch 1, **dadurch gekennzeichnet, dass** das mit Mercaptosilan funktionalisierte, poly(dimethylsiloxan)-terminierte Vinyl in der Formulierung in einer Menge von 2 Gew.-% bis 5 Gew.-% vorliegt.

**5.** Hybridformulierung gemäß Anspruch 1, **dadurch gekennzeichnet, dass** das Methacrylharz Trimethylpropantrimethylacrylat ist.

**6.** Hybridformulierung gemäß Anspruch 1, **dadurch gekennzeichnet, dass** der UV-Photoinitiator Bis-(2,4,6-trimethylbenzoyl)phenylphosphinoxid ist.

**7.** Hybridformulierung gemäß Anspruch 2, **dadurch gekennzeichnet, dass** das organische Lösungsmittel ein Alkohol ist.

**8.** Verwendung der Formulierung gemäß Anspruch 1 zur Beschichtung von Substraten unterschiedlicher Art.

**9.** Verfahren zur Herstellung der nanostrukturierten organisch-anorganischen Hybridformulierung, bestehend aus einer auf Methacrylsilanmonomeren basierenden organischen Phase und einer aus kontinuierlichen Siliziumdioxid-Nanodomainen zusammengesetzten, aus mindestens einem Alkoxysilan-Vorläufer erhaltenen organischen Phase, gemäß Anspruch 1, **dadurch gekennzeichnet, dass** es die folgenden Schritte umfasst:

a) Mischen einer Alkoxysilanverbindung und Trimethoxypropylsilanmethacrylat mit einem organischen Lösungsmittel bei einem sauren pH-Wert,
b) Hydrolysieren und Kondensieren der in Schritt a) erhaltenen Mischung mit Wasser,
c) Mischen des in Schritt b) erhaltenen Produkts mit einer aus Methacrylharz und einem mit Mercaptosilan funktionalisierten, poly(dimethylsiloxan)-terminierten Vinyl erhaltenen Mischung und
d) Einführen eines Photoinitiators in das in Schritt c) erhaltene Produkt.

**10.** Verfahren zur Herstellung der nanostrukturierten organisch-anorganischen Hybridformulierung gemäß Anspruch 9, **dadurch gekennzeichnet, dass** es die folgenden Schritte umfasst:

a) Mischen von 4 bis 15 Gew.-% einer Alkoxysilanverbindung, 20 bis 85 Gew.-% eines Trimethoxypropylsilanmethacrylates mit 1 bis 4 Gew.-% eines organischen Lösungsmittels bei einem sauren pH-Wert,
b) Hydrolysieren und Kondensieren der in Schritt a) erhaltenen Mischung mit 20 bis 30 Gew.-% Wasser, bezogen auf den Gehalt der Alkoxysilanverbindung,
c) Mischen des in Schritt b) erhaltenen Produktes mit einer Mischung, erhalten aus 5 bis 60 Gew.-% eines Methacrylharzes und 2 bis 5 Gew.-% eines mit Mercaptosilan funktionalisierten, poly(dimethylsiloxan)-terminierten Vinyl und

d) Einführen von 1 bis 3 Gew.-% eines Photoinitiators in das in Schritt c) erhaltene Produkt.

11. Verfahren nach Anspruch 9, **dadurch gekennzeichnet, dass** der pH-Wert der in Schritt a) erhaltenen Mischung 4 beträgt.

12. Verfahren nach Anspruch 9, **dadurch gekennzeichnet, dass** das Lösungsmittel Alkohol ist.

13. Verfahren nach Anspruch 9, **dadurch gekennzeichnet, dass** die Alkoxysilanverbindung Tetraethoxysilan ist.

14. Verfahren nach Anspruch 9, **dadurch gekennzeichnet, dass** das Methacrylharz Trimethylpropantrimethylacrylat ist.

15. Verfahren nach Anspruch 9, **dadurch gekennzeichnet, dass** der UV-Photoinitiator Bis-(2,4,6-trimethylbenzoyl)phenylphosphinoxid ist.


**Revendications**

1. Formulation hybride organique-inorganique nanostructurée réticulable par les rayons UV, composée d'une phase organique à base de monomères de silane méthacrylique et d'une phase inorganique composée de nanodomaines continus de silice obtenue à partir d'au moins un précurseur alcoxy-silane, **caractérisée en ce qu'**elle comprend un méthacrylate de triméthoxypropyl silane, un vinyle à terminaison poly(diméthylsiloxane) fonctionnalisé avec un mercaptosilane, au moins une résine méthacrylique et au moins un photoinitiateur UV.

2. Formulation hybride organique-inorganique nanostructurée réticulable par les rayons UV selon la revendication 1, **caractérisée en ce qu'**elle est obtenue à partir de 4 à 15 % en poids d'au moins un composé alcoxy-silane, et **en ce qu'**elle comprend de 22 à 90 % en poids de méthacrylate de triméthoxypropyl silane et de vinyle à terminaison poly(diméthylsiloxane) fonctionnalisé, de 5 à 60 % en poids d'une résine méthacrylique et de 1 à 3 % en poids d'un photoinitiateur UV et de 1 à 4 % en poids d'un solvant organique.

3. Formulation hybride selon la revendication 1, **caractérisée en ce que** le composé alcoxy-silane est le tétraéthoxysilane.

4. Formulation hybride selon la revendication 1, **caractérisée en ce que** le vinyle à terminaison poly(diméthylsiloxane) fonctionnalisé avec un mercaptosilane est présent dans la formulation en une quantité de 2 % à 5 % en poids.

5. Formulation hybride selon la revendication 1, **caractérisée en ce que** la résine méthacrylique est le triméthylacrylate de triméthylpropane.

6. Formulation hybride selon la revendication 1, **caractérisée en ce que** le photoinitiateur UV est le bis(2,4,6-triméthylbenzoyl)-phénylphosphinoxyde.

7. Formulation hybride selon la revendication 2, **caractérisée en ce que** le solvant organique est un alcool.

8. Utilisation de la formulation selon la revendication 1 pour revêtir des substrats de différente nature.

9. Procédé de préparation de la formulation hybride organique-inorganique nanostructurée composée d'une phase organique à base de monomères de silane méthacrylique et d'une phase inorganique composée de nanodomaines continus de silice obtenus à partir d'un précurseur alcoxy-silane selon la revendication 1, **caractérisé en ce qu'**il comprend les étapes suivantes :

a) le mélange d'un composé alcoxy-silane et d'un méthacrylate de triméthoxypropyl silane avec un solvant organique à un pH acide,
b) l'hydrolyse et la condensation du mélange obtenu à l'étape a) avec de l'eau,
c) le mélange du produit obtenu à l'étape b) avec un mélange obtenu par une résine méthacrylique et un vinyle à terminaison poly(diméthylsiloxane) fonctionnalisé avec un mercaptosilane, et
d) l'introduction d'un photoinitiateur dans le produit obtenu à l'étape c).

10. Procédé de préparation de la formulation hybride organique-inorganique nanostructurée selon la revendication 9, **caractérisé en ce qu'**il comprend les étapes suivantes :

a) le mélange de 4 à 15 % en poids d'un composé alcoxy-silane, de 20 à 85 % en poids d'un méthacrylate de triméthoxypropyl silane avec 1 à 4 % en poids d'un solvant organique à un pH acide,

b) l'hydrolyse et la condensation du mélange obtenu à l'étape a) avec 20 à 30 % en poids d'eau sur la base de la teneur en composé alcoxy-silane,

c) le mélange du produit obtenu à l'étape b) avec un mélange obtenu par 5 à 60 % en poids de résine méthacrylique et 2 à 5 % en poids de vinyle à terminaison poly(diméthylsiloxane) fonctionnalisé avec un mercaptosilane, et

d) l'introduction de 1 à 3 % en poids d'un photoinitiateur dans le produit obtenu à l'étape c).

11. Procédé selon la revendication 9, **caractérisé en ce que** le pH du mélange obtenu à l'étape a) est de 4.

12. Procédé selon la revendication 9, **caractérisé en ce que** le solvant est un alcool.

13. Procédé selon la revendication 9, **caractérisé en ce que** le composé alcoxy-silane est le tétraéthoxysilane.

14. Procédé selon la revendication 9, **caractérisé en ce que** la résine méthacrylique est le triméthylacrylate de triméthylpropane.

15. Procédé selon la revendication 9, **caractérisé en ce que** le photoinitiateur UV est le bis(2,4,6-triméthylbenzoyl)-phé-nylphosphinoxyde.

**FIG. 1A**

**FIG. 1B**

**FIG. 1C**

**FIG. 2**

**FIG. 3**

**FIG. 4**

**FIG. 5**

**FIG. 6**

**FIG. 7**

**FIG. 8**

**FIG. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20130005881 A
- KR 20040104155
- CN 101338086
- CN 102649835

### Non-patent literature cited in the description

- **M. MESSORI.** Materiali polimerici ibridi e nanostrutturati, Atti del XXVIII Convegno-Scuola AIM. *Gargnano,* 2007
- **X. XIAO ; C. HAO.** Preparation of waterborne epoxy acrylate/silica sol hybrid materials and study of their UV curing behavior. *Colloids Surfaces A: Physicochemical and Engineering Aspects,* 2010, vol. 359 (1-3), 82-87
- **S. BENFARHI ; C. DECKER ; L. KELLER ; K. ZAHOUILY.** Synthesis of clay nanocomposite materials by light-induced crosslink polymerization. *European Polymer Journal,* 2004, vol. 40
- Factors influencing proto curing kinetics of novel UV-cured siloxane-modified acrylic coatings: Oxygen inhibition and composition. **CAROLA ESPOSITO CORCIONE et al.** Thermochimica Acta. Elsevier Science Publishers, 27 January 2012, vol. 534, 21-27
- Preparation of weterborne epoxy acrylate/silica sol hybrid material and study of their UV curing behavior. **XIAO X et al.** Colloids and Surfaces, A: Physicochem. Eng. Aspects. Elsevier, 20 April 2010, vol. 359, 82-87
- Hybrid nanocornposites containing silica and PEO segments: preparation through dual -curing process and characterization. **MALUCELLI G et al.** Polymer. Elsevier Science Publishers B.V, 15 April 2005, vol. 46, 2872-2879
- **M. SANGERMANO ; G. MALUCELLI ; A. PRIOLA ; E. AMERIO ; E. ZINI ; E. FABBRI.** Hybrid nanocomposites containing silica and PEO segments: preparation through dual curing process and characterisation. *Polymer,* 2005, vol. 46/9
- **M. SANGERMANNO ; E. AMERIO ; G. MALUCELLI ; A. PRIOLA ; B. VOIT.** Preparation and characterisation of hybrid nanocomposite coating by photopolymerisation and sol-gel process. *Polymer,* 2005, vol. 46
- **M. SANGERMANNO ; E. AMERIO ; G. MALUCELLI ; A. PRIOLA ; G. RIZZA.** Preparation and characterisation of hyperbranched polymer/silica hybrid nanocoatings by dual-curing process. *Macromolecular materials and Engigeering,* 2006, vol. 291